## Europäisches Patentamt
## European Patent Office
## Office européen des brevets

(19)

(11) Publication number: **0 063 855**
**B1**

(12) **EUROPEAN PATENT SPECIFICATION**

(45) Date of publication of patent specification: **15.07.87**

(51) Int. Cl.⁴: **C 08 K 5/02, C 08 L 23/02**

(21) Application number: **82300429.6**

(22) Date of filing: **27.01.82**

(54) Flame retardant polymer compositions.

(30) Priority: **24.04.81 US 257082**

(43) Date of publication of application:
**03.11.82 Bulletin 82/44**

(45) Publication of the grant of the patent:
**15.07.87 Bulletin 87/29**

(84) Designated Contracting States:
**BE DE FR GB IT NL**

(56) References cited:
**US-A-3 723 383**
**US-A-4 000 114**

(73) Proprietor: **OCCIDENTAL CHEMICAL CORPORATION**
**P.O. Box 189**
**Niagara Falls New York 14302 (US)**

(72) Inventor: **Ilardo, Charles S.**
**151 Lorelee Drive**
**Tonawanda, NY 14150 (US)**
Inventor: **Scharf, Daniel J.**
**8177 Clarence Center Road**
**East Amherst, NY 14051 (US)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

**0 063 855**

**Description**

This invention relates to flame retardant polyolefin compositions.

Polyolefin compositions are finding increasing use in a diversity of applications such as wire coatings, pipes, conduits, automotive products, marine products, fibers, coatings, industrial moldings, extensions, and various other products. These and other uses are often served by polyolefin compositions that are flame retardant. Many prior art attempts to impart fire retardance to such compositions by the use of additives have adversely affected the desirable properties of the polymer due to the high proportions of fire retardant additive often required to achieve an adequate level of fire retardancy. In addition, prior products have often been adversely affected, due to the migratory properties and sensitivity to environmental conditions of the fire retardant additives used.

US—A—3723383 describes flame retardant compositions comprising a thermoplastic compound (including polyolefins), a polychloro-substituted organic compound (including adducts of polychloro-substituted cycloalkadienes and cyclic dienes or trienes) and a polybromo-substituted organic compound (including polybromo-substituted aromatic compounds).

US—A—4000114 describes fire retardant compositions comprising a high-impact thermoplastic polymer, decabromodiphenyl oxide and a diadduct of a halogenated cyclopentadiene and a polyunsaturated cyclic compound.

This invention provides fire retardant polyolefin compositions containing additives that not only impart constant fire resistance but also enhance or preserve other physical properties of the protected composition.

In accordance with this invention there is provided a fire retardant polymer composition comprising an aliphatic olefin polymer, antimony oxide and an effective fire retardant amount of halogenated organic compounds, characterised in that the halogenated organic compounds comprise a synergistic mixture of (1) a chlorinated organic compound which is a diadduct of hexachlorocyclopentadiene and 1,5-cyclooctadiene or furan and (2) a brominated aromatic component selected from polydibromophenylene oxide tetrabromoorthochlorotoluene, bis tetrabromophthalimido ethane and decabromodiphenyl oxide in a weight ratio of chlorine:bromine of 10:1 to 0.1:1.

Both the chlorinated and the brominated components (1) and (2) described herein include various materials known to be useful as flame retardant additives for various compositions. However, it has now been found and is exemplified hereinbelow, that the combination of the specified chlorinated and brominated components, when incorporated in a polyolefin composition, acts in a synergistic fashion, to provide a surprisingly higher degree of flame retardance than comparable additive compositions of either component individually.

The compounds employed as the chlorinated organic component (1) of the synergistic flame retardant additives of this invention are Diels-Alder adducts of hexachlorocyclopentadiene with 1,5-cyclooctadiene or furan. They are made by the Diels Alder reaction of one mole of hexachlorocyclopentadiene and two or more moles of 1,5-cyclooctadiene or furan. The diadduct formed with furan is named as 1,2,3,4,6,7,8,9,10,10,11,11 - dodecachloro - 1,4,4a,5,5a,6,9,9a,9b - octahydro - 1,4:6,9 - dimethanodibenzofuran, while that formed with 1,5-cyclooctadiene is named as 1,4,7,10-dimethanocyclo-octa - 1,2,3,4,7,8,9,10,13,13,14,14 - dodecachloro - 1,4,4a,5,6,6a,7,10,10a,11,12,12 - dodecahydro(1,2,5,6)di-benzene (1,5 COD).

The preparation of 1,5 COD is disclosed by Ziegler and Froitzheim-Kuhlhorn, Annalen, vol. 589, page 157 (1954). The adduct is prepared by condensing two moles of hexachlorocyclopentadiene with one mole of 1,5-cyclooctadiene in xylene at a temperature below 200°C. The adduct melts at above 350°C and has a vapor pressure of 0.8 Pa (0.006 mm Hg) at 197°C.

The olefin polymer-component of the compositions of this invention can be a high molecular weight polymer or resin as well as an intermediate molecular weight material utilized for coatings and paints. The olefin polymer can be, for example, polyethylene, polypropylene, or an ethylene/propylene copolymer. The polymer can be in various physical forms, such as shaped articles, for example moldings, sheets or rods, fibers, coatings, films or fabrics.

Two of the polymers that are particularly suitable for the fire retardant polymer compositions of this invention, polyethylene and polypropylene, are well known in the art. Low-density (0.92 grams/ml) polyethylene may be produced by the polymerization of ethylene at a pressure greater than twelve hundred bar and at a temperature of one hundred to three hundred degrees centigrade. Lower pressures of about five hundred bar can be used if a catalyst such as oxygen or benzoyl peroxide is added to the ethylene as described by Fawcett et al., Chemical Abstracts, 32, 1362 (1938).

In recent years a new field of linear and stereoregular polymers, has become available which are suitable for use in this invention. Polymers such as polypropylene are produced with organometallic catalysts and supported metal oxide catalysts as disclosed in great detail in Linear and Steroregular Addition Polymers: Polymerization With Controlled Propagation, Gaylord, N. G and Mark, H. F. Interscience Publishers, Inc. (1959). Monomers of the type disclosed hereinbefore are readily polymerized to solid polymers in the presence of a catalyst system comprising aluminum triethyl and titanium tetrachloride or titanium trichloride. The reaction is carried out in the presence of an inert hydrocarbon diluent, suitably purified of catalyst poisons, at a temperature in the range of fifty to two hundred and thirty degrees

2

centigrade. At the conclusion of the reaction, the polymer can be recovered from the resulting solution of suspension by evaporation of the diluent, whereupon the polymer is treated for removal of catalyst residues, for example, by washing with water or alcohol and acids. Metal oxide catalysts, such as chromium oxide supported on silica or alumina, are suitable for polymerizing 1-olefins containing a maximum of eight carbon atoms, with no branching closer to the double bond than the 4-position. Such polymerization may be carried out in the manner described for the organometallic catalyst system.

The chlorine-bromine containing additives of this invention may be incorporated into the polymer in a variety of ways. For example, the additives can be introduced into the polymer while the latter is dissolved in a suitable solvent. This procedure is especially useful when it is desired to mix the additives during the polymer manufacturing process. When the polymer is subsequently recovered from the solvent, the additives are intimately mixed with the polymer. Usually, the additives are mixed with the polymer in the molten state at temperatures that can range from the melting point to the decomposition temperature of the polymer, e.g., from 70 to 600 degrees centigrade. Alternatively, the additives and polymer are dry-blended in the finely-divided state so that an intimate mixture is obtained upon subsequent milling or extrusion.

The combination additive of the invention, that is the combination of the chlorinated and brominated components is incorporated in the polymeric material in an effective fire retardant proportion. Generally, the combination of halogenated components is incorporated in the amount of 2 to 60 percent by weight of the polymeric composition and desirably from 5 to 50 percent by weight of the polymer composition and preferably from 10 to 40 percent by weight of the total polymer composition. Within the chlorine and bromine-containing additive mixture, the relative proportions of chlorinated component and brominated component will vary depending on the particular compounds employed, but should provide a weight ratio of chlorine:bromine of between 10:1 and 0.1:1 and preferably 3:1 to 0.3:1.

The polymer composition of the invention also contains antimony oxide in the amount of 1 to 30 percent by weight of said total composition, preferably 2 to 25 percent.

The following Examples are provided to illustrate this invention and the manner in which it may be carried out. In the examples, unless otherwise indicated, all parts and percentages are by weight and all temperatures are in degree Celsius.

Example 1

Sixty parts of general purpose polypropylene (PP), were banded on a two roll rubber mill, operated at about 177—181°C. To the banded polypropylene was added 15 parts of 1,5 COD, 15 parts of decabromodiphenyl oxide (DBO), 5 parts of antimony oxide (A) and 5 parts of zinc borate (ZB). Mixing was continued until the mixture was uniform. The milled sheet was then granulated and the granules were injection molded at 240°—232°C into 0.3×13×1.3 cm (0.125×5×0.5 inch) bars. The bars were tested for oxygen index following the procedure of ASTM-D2863-30.

Examples 2 to 11

Following a similar procedure to that of Example 1 using varying proportions of components and replacing the 1,5 COD (used in Examples 1 to 5) by a diadduct of hexachlorocyclopentadiene and furan (HF—Examples 7 to 10), a series of fire retardant polypropylene samples were prepared and tested, with the results as shown in Table I, below:

3

# 0 063 855

TABLE I

| Example | Composition (parts by weight) | | | | | | Oxygen index |
|---|---|---|---|---|---|---|---|
| | PP | AO | ZB | 1,5 COD | HF | DBO | |
| 1 | 60 | 5 | 5 | 15 | — | 15 | 31.3 |
| 2 (control) | 60 | 5 | 5 | 30 | — | — | 27.9 |
| 3 | 60 | 5 | 5 | 20 | — | 10 | 29.0 |
| 4 | 60 | 5 | 5 | 12.5 | — | 17.7 | 32.4 |
| 5 | 5 | 5 | 10 | — | — | 20 | 28.2 |
| 6 (control) | 60 | 10 | — | — | — | 30 | 27.2 |
| 7 (control) | 60 | 5 | 5 | — | 30 | — | 29.4 |
| 8 | 60 | 5 | 5 | — | 22.5 | 7.5 | 30.4 |
| 9 | 60 | 5 | 5 | — | 15 | 15 | 30.8 |
| 10 | 60 | 5 | 5 | — | 7.5 | 22.5 | 30.3 |
| 11 (control) | 60 | 10 | — | — | — | 30 | 29.3 |

Examples 12 to 16

Following the procedure of the preceding examples, a series of fire retardant polypropylene compositions were prepared employing polydibromophenylene oxide as the brominated component. The compositions and test results are set forth in Table II below.

TABLE II

| Composition (parts by weight) | Examples | | | | |
|---|---|---|---|---|---|
| | 12 (control) | 13 | 14 | 15 | 16 (control) |
| Polypropylene | 60 | 60 | 60 | 60 | 60 |
| Antimony trioxide | 5 | 5 | 5 | 5 | 5 |
| Zinc borate | 5 | 5 | 5 | 5 | 5 |
| 1,5 COD | 30 · | 22.5 | 15 | 7.5 | — |
| Polydibromophenylene oxide | — | 7.5 | 15 | 22.5 | 30 |
| Oxygen index | 27.3 | 27.8 | 29.7 | 28.7 | 25.9 |

Examples 17 to 21

Following the procedure of the preceding examples fire retardant polypropylene compositions were prepared employing tetrabromo-orthochlorotoluene as the brominated component. The compositions and test results are set forth in Table III.

4

**0 063 855**

TABLE III

| Composition (parts by weight) | Examples | | | | |
| | 17 (control) | 18 | 19 | 20 | 21 (control) |
|---|---|---|---|---|---|
| Polypropylene | 60 | 60 | 60 | 60 | 60 |
| Antimony oxide | 5 | 5 | 5 | 5 | 5 |
| Zinc borate | 5 | 5 | 5 | 5 | 5 |
| 1,5 COD | 30 | 22.5 | 15 | 7.5 | — |
| Tetrabromo-orthochlorotoluene | — | 7.5 | 15 | 22.5 | 30 |
| Oxygen index | 26.5 | 28.4 | 28.8 | 26.8 | 23.4 |

Examples 21 to 25

Fire retardant low density polyethylene test samples were prepared and tested following the procedure described above except that the composition was varied as shown in Table IV below.

TABLE IV

| Composition (parts by weight) | Examples | | | | |
| | 21 (control) | 22 | 23 | 24 | 25 (control) |
|---|---|---|---|---|---|
| Low density polyethylene | 60 | 60 | 60 | 60 | 60 |
| Antimony oxide | 10 | 10 | 10 | 10 | 10 |
| 1,5 COD | 30 | 22.5 | 15 | 7.5 | — |
| Bis tetrabromophthalimido ethane | — | 7.5 | 15 | 22.5 | 30 |
| Oxygen index | 25.0 | 29.6 | 31.8 | 32.2 | 27.0 |

Examples 26 to 35

Cross-linked fire retardant polyethylene (PE) test samples were prepared and tested following the procedure described above except that the composition was varied as shown in Table V and the procedure was varied as follows: after mixing the fire retardant additives the polyethylene was treated with dicumym peroxide curing agent in the amount of about 6.75 parts per 100 parts of fire retardant polyethylene and was then cross-linked and compression molded for 1/2 hour at 160°C.

5

## TABLE V

| Example | Composition (parts by weight) | | | | | | Oxygen index |
|---|---|---|---|---|---|---|---|
| | PE | AO | 1,5 COD | HF | DBO | PBPO[1] | |
| 26 (control) | 60 | 10 | — | 30 | — | — | 26.8 |
| 27 | 60 | 10 | — | 22.5 | 7.5 | — | 28.9 |
| 28 | 60 | 10 | — | 15 | 15 | — | 29.8 |
| 29 | 60 | 10 | — | 7.5 | 22.5 | — | 31.6 |
| 30 (control) | 60 | 10 | — | — | 30 | — | 27.4 |
| 31 (control) | 60 | 10 | 30 | — | — | — | 26.9 |
| 32 | 60 | 10 | 22.5 | — | — | 7.5 | 30.4 |
| 33 | 60 | 10 | 15 | — | — | 15 | 33.4 |
| 34 | 60 | 10 | 7.5 | — | — | 22.5 | 30.2 |
| 35 (control) | 60 | 10 | — | — | — | 30 | 27.4 |

[1]PBPO is polydibromophenylene oxide.

**Claims**

1. A fire retardant polymer composition comprising an aliphatic olefin polymer, antimony oxide and an effective fire retardant amount of halogenated organic compounds, characterised in that the halogenated organic compounds comprise a synergistic mixture of (1) a chlorinated organic compound which is a diadduct of hexachlorocyclopentadiene and 1,5-cyclooctadiene or furan and (2) a brominated aromatic component selected from polydibromophenylene oxide, tetrabromoorthochlorotoluene, bis tetrabromophthalimido ethane and decabromodiphenyl oxide in a weight ratio of chlorine:bromine of 10:1 to 0.1:1.

2. A composition according to claim 1 wherein the olefin polymer is polypropylene or polyethylene.

3. A composition according to claim 1 or 2 wherein (1) and (2) are present in a total amount between 10 and 40 percent by weight of the composition, the weight ratio of chlorine:bromine is 3:1 to 0.3:1 and the amount of antimony oxide is 2 to 25 percent by weight of the composition.

**Patentansprüche**

1. Flammfeste Polymermasse, enthaltend ein aliphatisches Polyolefin, Antimonoxid und eine wirksam flammhemmende Menge organischer Halogenverbindung, dadurch gekennzeichnet, daß die organischen Halogenverbindungen ein synergistisches Gemisch aus  -

(1) mindestens einer organischen Verbindung, die ein Diaddukt von Hexachlorcyclopentadien an 1,5-Cyclopentadien oder Furan ist, und

(2) mindestens einer der organischen Bromverbindungen Polydibromphenylenoxid, Tetrabromorthochlortoluol, Bis-tetrabromnaphthalinimidoäthan und Decabromdiphenyloxid in einem Gewichtsverhältnis von Chlor zu Brom von 10:1 bis 0,1:1 entsprechenden Mengen umfassen.

2. Polymermasse nach Anspruch 1, dadurch gekennzeichnet, daß sie als Polyolefin Polypropylen und/oder Polyäthylen enthält.

3. Polymermasse nach Anspruch 1 oder 2, dadurch gekennzeichnet, daß sie, bezogen auf ihr Gesamtgewicht, die Halogenverbindungen (1) und (2) in einer Gesamtmenge von 10 bis 40 Gew.-% und in einem Gewichtsverhältnis von Chlor zu Brom von 3:1 bis 0,3:1 entsprechenden Mengen, sowie 2 bis 25 Gew.-% Antimonoxid enthält.

**Revendications**

1. Composite polymère retardatrice de flamme comprenant un polymère d'oléfine aliphatique, de l'oxyde d'antimoine et une quantité efficace pour retarder la flamme de composés organiques halogénés, caractérisée en ce que les composés organiques halogénés comprennent un mélange synergique de (1) un composé organique chloré qui est un produit d'addition double d'hexachlorocyclopentadiène et de

**0 063 855**

1,5-cyclooctadiène ou de furanne et (2) un composant aromatique bromé choisi parmi l'oxyde de polydibromophénylène, le tétrabromoorthochlorotoluène, le bis tétrabromophthalimido étahen et l'oxyde de décabromodiphényle, le rapport en poids du chlore au brome étant compris entre 10:1 et 0,1:1.

2. Composition selon la revendication 1, dans laquelle le polymère d'oléfine est le polypropylène ou le polyéthylène.

3. Composition selon la revendication 1 ou 2, dans laquelle les composés (1) et (2) sont présents en une quantité totale comprise entre 10 et 40% en poids de la composition, le rapport en poids de chlore au brome est 3:1 à 0,3:1 et la quantité d'oxyde d'antimoine est comprise entre 2 et 25% en poids de la composition.